# EUROPEAN PATENT APPLICATION

(11) **EP 4 624 506 A1**
(43) Date of publication of application: **01.10.2025**
(21) Application number: 24167587.5
(22) Date of filing: 28.03.2024
(51) Int. Cl.: C08G 18/76, C08K 3/04, C08L 75/06, C09D 175/04, C09D 175/06

(54) **MULTICOMPONENT POLYURETHANE COMPOSITION**

(71) Applicant: Sika Technology AG, 6340 Baar (CH)
(72) Inventor: BUSCH, Suzanne, 72800 Eningen (DE); KECK, Axel, 73257 Köngen (DE); PREUSCH, Felix, 72793 Pfullingen (DE)
(74) Representative: Sika Patent Attorneys

(57) **Abstract**

A multi-component polyurethane composition, especially a two-component polyurethane composition, comprising a first component comprising at least one polyisocyanate and a second component comprising at least one polyol, whereby the composition further comprises branched carbon nanotubes and optionally single-walled carbon nanotubes.

## Description

### Technical field

The invention is concerned a multi-component polyurethane composition, especially a two-component polyurethane composition, comprising a first component comprising at least one polyisocyanate and a second component comprising at least one polyol. Furthermore, the invention is directed to the use of a multi-component polyurethane composition for producing a printing sleeve as well as to a method for producing or recycling a printing sleeve. Another aspect of the present invention is directed to a printing sleeve.

### Background art

In printing technology, such as e.g. flexography, intaglio printing or offset printing, printing cylinders serve the function of transferring an inked image onto a substrate. Traditionally, printing cylinders in the form of solid metal cylinders have been used. Newer technologies are based on multi-part cylinders comprising sleeves. These are flexible tubes that can be slid over a core part of the printing cylinder, e.g. a mandrel and/or a printing bridge (adapter), where they conform to its shape and size. Thereby, for example, a printing plate is affixed to the sleeve, which is then mounted onto the core part. The sleeve thus serves as a carrier for the printing plate, ensuring precise alignment and consistent, accurate printing throughout the printing process. If the printing plate is worn or another printing plate is required, it can easily be exchanged in a highly flexible manner. Also, it is possible to provide sleeves that serve the function of a printing plate. In this case, no additional printing plate needs to be mounted.

Printing sleeves usually are made of or coated with a durable material with antistatic properties, e.g. based on silicones or polyurethanes. Thereby conductive additives may be added to reduce resistivity and to provide desired electrostatic discharging (ESD) properties or special hardening agents may be added to increase stability and durability of the materials.

Polyurethane compositions with improved electrical conductivity are for example known from DE 10 2020 204 215 A1 (Rampf Holding GmbH). Thereby, polyurethane compositions are proposed that comprise single-walled carbon nanotubes and conductive carbon particles.

However, known materials are not completely convincing with respect to workability, antistatic properties and/or durability in combination. The curable composition in such applications is commonly applied on a rotating cylinder, which demands from the freshly mixed two-component compositions that they exhibit a high yield point and remain in place immediately after mixing and application on the rotating substrate, whereas the two components themselves prior to mixing and application need to be flowable and pumpable in order to enable an efficient production process.

Common state of the art to achieve this property is chemical thixotropization (i.e., addition of chemicals that impart thixotropic properties in the composition), which produces exactly this effect that after mixing and application the mixed product is not flowing any longer under low or no shear stress. However, this chemically induced thixotropy has a negative effect on the ESD properties. Even slight amounts of thixotroping agent (most commonly amine-based organic compounds) are highly detrimental to the conductivity properties.

Thus, with the current state of the art solutions, either a suitable application performance with thixotropy or useful conductivity properties can be achieved. Hence, although known materials may be beneficial with respect to one of these properties, there is hardly any material that can fulfill all of these properties in combination in a satisfactory manner.

Thus, there is still a need to develop improved solutions, which overcome the aforementioned drawbacks at least partly.

### Disclosure of the invention

It is an object of the present invention to provide improved materials that can be used for producing printing sleeves or products with similar requirements. In particular, the materials should be easy to process, have a suitable flowability under shear forces present during application, be applicable to cylinder-shaped objects, in particular rotating such objects, be chemically and/or mechanically stable and durable, and/or have suitable antistatic properties. Furthermore, products or coatings as homogeneous as possible should be obtainable, especially having no or only very small and few bubbles.

Surprisingly, it was found that these objects can be achieved with the composition according to claim 1. Specifically, the invention is concerned with a multi-component polyurethane composition, especially a two-component polyurethane composition, comprising a first component comprising at least one polyisocyanate and a second component comprising at least one polyol, whereby the composition further comprises branched carbon nanotubes and, optionally, single-walled carbon nanotubes (SWCNT).

Unexpectedly, the use of branched carbon nanotubes in a multi-component polyurethane composition allows for providing formulations of multi-component polyurethane composition that combine several advantageous properties, which allow for using the compositions in the production of printing sleeves or products with similar requirements. Especially, compositions are available that show beneficial workability, flowability, thixotropy, antistatic properties, as well as chemical and mechanically stability and durability for such kind of applications. In particular, undesired sagging hardly is in issue when applying the multi-component polyurethane composition according to the invention on cylinder-shaped objects such as printing sleeves.

Furthermore, costs for producing the polyurethane compositions according to the invention are at a remarkably low level and processability of the polyurethane compositions during production is very good. Also, the compositions are rather easy to pump with standard gear or membrane pumps, i.e. in general no barrel press is needed to convey the polyurethane compositions.

Furthermore, blistering hardly is an issue with polyurethane compositions according to the invention, which allows to form highly uniform products and coatings.

Overall, the polyurethane compositions according to the invention are highly beneficial and can be used for numerous applications.

Further aspects of the present invention are subject of further independent claims and/or outlined throughout the description and the dependent claims.

### Ways of carrying out the invention

A first aspect of the present invention is directed to a multi-component polyurethane composition, especially a two-component polyurethane composition, comprising a first component comprising at least one polyisocyanate and a second component comprising at least one polyol, whereby the composition further comprises branched carbon nanotubes and optionally single-walled carbon nanotubes (SWCNT).

The term "multi-component composition" denotes a composition in which the constituents of the same are present in two or more different components, which are stored in separate containers and which on their own are storage stable in each case. A "two-component composition" is a composition in which the constituents of the same are present in exactly two different components or containers, respectively.

The two or more components are not mixed with each other until just prior to or during the application of the composition, whereupon the mixed composition cures, curing in some circumstances only taking place or being completed under the action of moisture and/or an elevated temperature.

The branched carbon nanotubes and/or, if present the optional single-walled carbon nanotubes (SWCNT), is/are present in the first component and/or the second component, especially preferred in the second component.

However, in another embodiment, the branched carbon nanotubes and, if present the optional single-walled carbon nanotubes (SWCNT), may also be present in a further component of the multi-component composition.

Substance names beginning with "poly", such as polyol or polyisocyanate, denote substances that, per molecule, formally comprise two or more of the functional groups occurring in their names.

For the present purposes, the term "particles" refers, in particular, to solids having an average particle size of less than 1000 µm, in particular less than 500 µm. The particle size, the distribution thereof or the average particle size can be determined, in particular, by laser light scattering, preferably in accordance with the standard ISO 13320:2009. In particular, a Mastersizer 2000 instrument with a dispersing unit Hydro 2000G and the software Mastersizer 2000 from Malvern Instruments GmbH (Germany) can be used for this purpose. The average or mean particle size corresponds in the present case to the D50 value (50% of the particles are smaller than the indicated value, 50% are accordingly larger).

Carbon nanotubes (CNT) are tubes essentially made of carbon with diameters typically in the range of less than 100 nm.

Especially, carbon nanotubes may be single-walled carbon nanotubes (SWCNT), multi-walled carbon nanotubes (MWCNT), nanotubes with more complex wall structures such as e.g. branched carbon nanotubes (CNS).

In particular, although not produced in this manner, one can imagine single-walled carbon nanotubes as cutouts from a two-dimensional hexagonal lattice of carbon atoms rolled up along one of the Bravais lattice vectors of the hexagonal lattice to form a hollow cylinder. Multi-wall carbon nanotubes usually consist of nested single-wall carbon nanotubes weakly bound together by in a tree ring-like structure.

Branched carbon nanotubes refer to carbon nanotube structures characterized by the presence of additional, nanotube branches extending from a main tubular structure, which may in particular be a multi-walled structure. These branches can emerge radially from the sidewalls or tips of the primary nanotube, creating a complex nanostructure. The branching in carbon nanotubes can occur during the growth process or through post-synthetic modification methods. US 7,144,563 B2 (Clemson University) describes for example methods for producing branched carbon nanotubes.

In contrast to carbon nanotubes, carbon fibers are solid strands of carbon atoms. In particular, carbon fibers are made of loosely packed layers of graphite sheets stacked parallel to one another. Thus, although based on the same atom type, i.e. carbon, carbon fibers are structurally very different from carbon nanotubes. Usually, individual carbon fibers have a diameter of about 5 to 10 µm.

Especially the branched carbon nanotubes are provided and/or used in the form of a particulate solid especially a powder.

In the present case, the branched carbon nanotubes are particles having an outer mean diameter with D10 = 6 - 9 nm, D50 = 9 - 13 nm and/or D90 = 19 - 21 nm. The outer diameter can e.g. be measured by optical absorption in line with standard ISO/TS 10868:2017. Another suitable method to determine the outer diameter is scanning electron microscopy (SEM). D10 means that 10% of the particles are smaller than the indicated value, 90% are accordingly larger; D50 means that 50% of the particles are smaller than the indicated value, 50% are accordingly larger; D90 means that 90% of the particles are smaller than the indicated value, 10% are accordingly larger.

A length of the branched carbon nanotubes in particular is in the range of 25 - 140 µm, especially an average length D50 is in the range of 30 - 70 µm, in particular 40 - 60 µm, e.g. 50 µm. Lengths of the branched carbon nanotubes can be measured by standard atomic force microscopy (AFM).

In particular, an average aspect ratio, i.e. the average ratio of the length to diameter of the branched carbon nanotubes, is at least 500, in particular at least 1'200, especially at least 3'500, particularly at least 4'500. Especially, the average ratio of the length to diameter of the branched carbon nanotubes is at most 30'000, in particular at most 20'000, especially at most 10'000, particularly at most 5'500. For example, an average ratio of the length to diameter of the branched carbon nanotubes is in the range of 3'500 - 6'000, especially 4'500 - 5'500.

The branched carbon nanotubes preferably have a specific surface area of 150 - 350 m²/g, in particular 175 - 250 m²/g, especially 180 - 220 m²/g. The specific surface can be determined by BET surface area analysis with N₂ in a conventional manner known to the skilled person.

In the present case, preferably, the branched carbon nanotubes are branched multi-walled carbon nanotubes, especially branched and cross-linked multi-walled carbon nanotubes. Preferably, the number of walls ranges from 2-14.

In the cross-linked and branched multi-walled carbon nanotubes, carbon nanotube walls in particular are shared between adjacent tubes. Put differently, cross-linked and branched multi-walled carbon nanotubes can be considered a highly structurally entangled polymer of multi-walled carbon nanotubes.

Cross-linked and branched multi-walled carbon nanotubes are commercially available, e.g. under the tradename "ATHLOS'^{™} SR1200 Carbon Nanostructure Pellets" from Cabot Corporation USA.

Preferably, with respect to the total weight of the second component, a proportion of the branched carbon nanotubes is from >0 - 1 wt.%, especially >0 - 0.5 wt.%, in particular 0.1 - 0.4 wt.%, especially 0.2 - 0.3 wt.%. Such proportions turned out to be best for achieving the desired effects according to the invention.

Further preferred, the multi-component polyurethane composition comprises both, the branched carbon nanotubes and the single-walled carbon nanotubes. The single-walled carbon nanotubes are chemically and/or physically different from the branched carbon nanotubes.

The combination of the two types of nanotubes further enhances the above-described advantages. Especially, the additional single-walled carbon nanotubes help to decrease the electrical resistivity of the compositions and thus to improve antistatic properties. Also, the sagging behavior can further be improved. Therefore, the branched carbon nanotubes and the single-walled carbon nanotubes functionally interact in a synergistic manner in the polyurethane composition according to the invention.

The single-walled carbon nanotubes preferably have an outer mean diameter of about 0.4 - 25 nm, especially 0.6 - 10 nm, for example 1 - 5 nm, in particular 1.2 - 2.0 nm. The outer diameter can e.g. be measured by optical absorption in line with standard ISO/TS 10868:2017.

In particular, the single-walled carbon nanotubes have a mean length of at least 0.5 µm, especially of at least 1 µm, in particular of at least 4 µm, especially of at least 5 µm. For example, the carbon nanotubes have a mean length of 0.5 - 5'000 µm, especially 1 - 1'000 µm, for example >5 - 100 µm. Lengths of the carbon nanotubes can be measured by standard atomic force microscopy (AFM).

Preferably, the single-walled carbon nanotubes are provided and/or used in the form of a dispersion in a liquid medium, especially a surfactant, in particular a nonionic surfactant. The surfactant may for example be selected from fatty acid alcohols, preferably C12 - C15 fatty acid alcohols that may optionally be ethoxylated and/or propoxylated.

Such kind of dispersed single-walled carbon nanotubes are commercially available, e.g. under the tradename "TUBALL MATRIX 301" from OCSiAl Europe.

A weight proportion of the single-walled carbon nanotubes in the dispersion preferably is from 1 - 40 wt.%, especially 3 - 20 wt.%, in particular 7 - 13 wt.%, with respect to the overall weight of the dispersion.

Especially, with respect to the total weight of the second component, a proportion of the single-walled carbon nanotubes is from >0 - 1 wt.%, especially >0 - 0.3 wt.%, in particular 0.01 - 0.15 wt.%, especially 0.02 - 0.07 wt.%.

Preferably, a weight ratio of the branched carbon nanotubes to the single-walled carbon nanotubes is in the range of 0.05 - 15, especially 0.1 - 13, in particular 0.5 - 12, particularly 1 - 11, for example 2 - 7.

These proportions and ratios further enhance the desired effects.

The term "polyisocyanate" stands for compounds having two or more isocyanate groups, regardless of whether these are monomeric diisocyanates, oligomeric polyisocyanates or polymers comprising isocyanate groups.

A suitable polyisocyanate, for example, is a polyisocyanate in the form of a monomeric diisocyanate or triisocyanate or an oligomer of a monomeric diisocyanate or a derivative of a monomeric diisocyanate.

For example, suitable monomeric diisocyanates or triisocyanates are 1,4-tetramethylene diisocyanate, 2-methylpentamethylene-1,5 diisocyanate, 1,6-hexamethylene diisocyanate (HDI), 2,2,4- and 2,4,4-trimethyl-1,6-hexamethylene diisocyanate (TMDI), 1,10-decamethylene diisocyanate, 1,12-dodecamethylene diisocyanate, lysine and lysine ester diisocyanate, cyclohexane-1,3 and -1,4 diisocyanate, 1-methyl-2,4- and -2,6-diisocyanato cyclohexane and any arbitrary mixtures of these isomers, 1-isocyanato-3,3,5-trimethyl-5-isocyanatomethyl cyclohexane (=isophorone diisocyanate or IPDI), perhydro-2,4'- and -4,4'-diphenylmethane diisocyanate (HMDI), 1,4-diisocyanato-2,2,6-trimethylcyclohexane (TMCDI), 1,3- and 1,4-bis-(isocyanatomethyl)-cyclohexane, m- and p-xylylene diisocyanate (m- and p-XDI), m- and p-tetramethyl-1,3- and - 1,4-xylylene diisocyanate (m- and p-TMXDI), bis-(1-isocyanato-1-methylethyl)naphthalene, dimer and trimer fatty acid isocyanates, such as 3,6-bis-(9-isocyanatononyl)-4,5-di-(1-heptenyl)cyclohexene (dimeryl diisocyanate), α,α,α',α',α",α"-hexamethyl-1,3,5-mesitylene triisocyanate, 2,4- and 2,6-toluylene diisocyanate and arbitrary mixtures of these isomers (TDI), 4,4'-, 2,4'- and 2,2'-diphenylmethane diisocyanate and arbitrary mixtures of these isomers (MDI), mixtures made of MDI and MDI homologs (polymeric MDI or PMDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatodiphenyl (TODI), dianisidine diisocyanate (DADI), 1,3,5-tris-(isocyanatomethyl)benzene, tris-(4-isocyanatophenyl)methane and tris-(4-isocyanatophenyl)thiophosphate.

Preferred polyisocyanates are commercially available diisocyanates. Particularly preferred are HDI, IPDI, TDI, MDI, and/or oligomers of diisocyanates and isocyanate group-comprising polyurethane polymers (NCO prepolymers). For example, the at least one polyisocyanate comprises or consists of MDI.

With respect to the total weight of the first component, the first component preferably comprises 50 - 100 wt.%, especially 60 - 99 wt.%, in particular 75 - 95 wt.%, of the at least one polyisocyanate.

For example, the following commercially available polyols, or mixtures thereof, can be used as the at least one polyol:
∘ Polyoxyalkylene polyols, also referred to as polyether polyols or oligoetherols, which are polymerization products of ethylene oxide, 1,2-propylene oxide, 1,2- or 2,3-butylene oxide, oxetane, tetrahydrofurane or mixtures thereof, potentially polymerized with the aid of a starter molecule having two or more active hydrogen atoms, such as water, ammonia or compounds comprising multiple OH or NH groups, such as 1,2-ethanedial, 1,2- and 1,3-propanediol, neopentyl glycol, diethylene glycol, triethylene glycol, the isomeric dipropylene glycols and tripropylene glycols, the isomeric butanediols, pentanediols, hexanediols, heptanediois, octanediols, nonanediols, decanediols, undecanediols, 1,3- and 1,4-cyclohexane dimethanol, bisphenol A, hydrogenated bisphenol A, 1,1,1-trimethylolethane, 1,14-trimethylolpropane, glycerin, aniline, as well as mixtures of the above-mentioned compounds. It is possible to use both polyoxyalkylene polyols that have low levels of unsaturation (as measured according to ASTM D-2849-69 and indicated in milliequivalents unsaturation per gram of polyol (mEq/g)), for example produced with the aid of what are known as double metal cyanide complex catalysts (DMC catalysts), and polyoxyalkylene polyols that have higher levels of unsaturation, for example produced with the aid of anionic catalysts such as NaOH, KOH, CsOH or alkali alcoholates.
∘ Polyoxyalkylene diols or polyoxyalkylene triols, and more particularly polyoxyethylene and polyoxypropylene diols and triols, are particularly suitable. Specifically suited are polyoxyalkylene diols and triols having a level of unsaturation of less than 0.02 mEq/g and a molecular weight ranging from 1,000 to 30,000 g/mol, and polyoxypropylene diols and triols having a molecular weight ranging from 400 to 8,000 g/mol.
∘ So-called ethylene oxide-terminated ("EO-endcapped", ethylene oxide-endcapped)) polyoxypropylene polyols are likewise particularly suitable. The latter are special polyoxypropylene polyoxyethylene polyols, which can be obtained, for example, by further alkoxylating pure polyoxypropylene polyols, in particular polyoxypropylene diols and trials, after the polypropoxylation reaction with ethylene oxide is completed, as a result of which these comprise primary hydroxyl groups.
∘ Polyether polyols grafted with styrene-acrylonitrile or acrylonitrile-methyl methacrylate.
∘ Polyester polyols, also referred to as oligoesterols, produced according to known methods, in particular the polycondensation of hydroxycarboxylic acids or the polycondensation of aliphatic and/or aromatic polycarboxylic acids with dihydric or polyhydric alcohols.
∘ Particularly suitable polyester polyols are those which are produced from dihydric to trihydric, in particular dihydric alcohols, such as ethylene glycol, diethylene glycol, propylene glycol, dipropylene glycol, neopentyl glycol, 1,4-butanediol, 1,5-pentanediol, 3-methyl-1,5-hexanediol, 1,6-hexanediol, 1,8-octanediol, 1,10-decanediol, 1,12-dodecanediol, 1,12-hydroxystearyl alcohol, 1,4-cyclohexane dimethanol, dimer fatty acid diol (dimer diol), hydroxypivalinic acid neopentyl glycol ester, glycerin, 1,1,1-trimethylolpropane, or mixtures of the aforementioned alcohols, with organic dicarboxylic or tricarboxylic acids, in particular dicarboxylic acids, or the anhydrides or esters thereof, such as succinic acid, glutaric acid, adipic acid, trimethyl adipic acid, suberic acid, azelaic acid, sebacic acid, dodecanedicarboxylic acid, maleic acid, fumaric acid, dimer fatty acid, phthalic acid, phthalic acid anhydride, isophthalic acid, terephthalic acid, dimethyl terephthalate, hexahydrophthalic acid, trimellitic acid and trimellitic acid anhydride, or mixtures of the aforementioned acids, and polyester polyols made of lactones, such as E caprolactone and starters, such as the aforementioned dihydric and trihydric alcohols.
∘ Polycarbonate polyols, such as those that become available by reacting, for example, the above-mentioned alcohols - used for the synthesis of the polyester polyols - with dialkyl carbonates, diaryl carbonates or phosgene.
∘ Block copolymers which carry at least two hydroxyl groups and which comprise at least two different blocks having a polyether, polyester and/or polycarbonate structure of the type described above, in particular polyether polyester polyols.
∘ Polyacrylate and polymethacrylate polyols.
∘ Polyhydroxy-functional fats and oils, such as natural fats and oils, in particular castor oil; or polyols obtained by chemical modification of natural fats and oils-so-called oleochemical polyols-such as the epoxy polyesters or epoxy polyethers obtained by epoxidation of unsaturated oils and by subsequent ring opening with carboxylic acids or alcohols, or polyols obtained by hydroformylation and hydrogenation of unsaturated oils; or polyols obtained from natural fats and oils by decomposition processes such as alcoholysis or ozonolysis and subsequent chemical cross-linkage, such as by transesterification or dimerization, of the decomposition products thus gained or derivatives thereof. Suitable decomposition products of natural fats and oils are in particular fatty acids and fatty alcohols as well as fatty acid esters, in particular the methyl esters (FAME), which can be derivatized by hydroformylation and hydrogenation to form hydroxyfatty acid esters, for example.
∘ Polyhydrocarbon polyols, also referred to as oligohydrocarbonols, such as polyhydroxy-functional polyolefins, polyisobutylenes, polyisoprenes; polyhydroxy-functional ethylene propylene, ethylene butylene or ethylene propylene diene copolymers; polyhydroxy-functional polymers of dienes, in particular of 1,3-butadiene, which can produced in particular also from anionic polymerization; polyhydroxy-functional copolymers from dienes such as 1,3-butadiene or diene mixtures and vinyl monomers such as styrene, acrylonitrile, vinyl chloride, vinyl acetate, vinyl alcohol, isobutylene and isoprene, for example polyhydroxy-functional acrylonitrile/butadiene copolymers, as they can be produced, for example, from epoxides or amino alcohols and carboxyl-terminated acrylonitrile/butadiene copolymers; and hydrogenated polyhydroxy-functional polymers or copolymers of dienes.

The at least one polyol preferably has an average molecular weight of 250 to 30,000 g/mol, in particular of 400 to 20,000 g/mol. The term "molecular weight" of oligomers or polymers is always understood to mean the number average molecular weight Mₙ.

Especially, the at least one polyol has an average OH functionality in the range of 1.6 to 4, especially 1.6 to 3.

Preferably, the at least one polyol contains or consists of a mixture of polyols with different OH functionality.

The use of polyether polyols, polyester polyols and/or polycarbonate polyols is particularly preferred. Preferred polyether polyols are polypropylene polyols and/or mixed polyethylene polypropylene polyols.

Especially preferred are mixtures of polyether polyols and polyester polyols, whereby, in particular, an OH functionality of the polyether polyols is different from the OH functionality of the polyester polyols.

With respect to the total weight of the second component, the second component preferably comprises from 50 - 100%, especially 60 - 96%, in particular 75 - 95 wt.%, of the at least one polyol.

In preferred embodiments, with respect to the total weight of the second component, the second component preferably comprises from 50 - 100%, especially 60 - 95%, in particular 65 - 80 wt.%, of the at least one polyester polyol, in particular at least one polyester diol.

According to a highly preferred embodiment, the multi-component composition further comprises at least one catalyst, especially selected from organometallic compounds and/or amines.

The at least one catalyst for example is selected from bismuth, tin, zinc, and/or zirconium compounds; and/or from secondary and/or tertiary amines.

Especially the catalyst comprises a tin compound, e.g. selected from dialkyltin carboxylates, in particular dialkyltin dicarboxylates, preferably dibutyltin dilaurate, dibutyltin diacetate, dioctyltin dilaurate, and/or tin 2-ethylhexanoate.

Suitable amines are e.g. selected form the group of triethylamine, N,N-dimethylcyclohexylamine, N-methylmorpholine, N,N-dimethylpiperazine, and/or 1,4-diazabicyclo[2.2.2]octane.

Preferably, the at least one catalyst is present in the second component.

A proportion of the at least one catalyst, with respect to the overall weight of the second component, preferably is in the range of 0.0001 - 1 wt.%, especially 0.001 - 0.8 wt.%, in particular 0.002 - 0.5 wt.%.

The multi-component composition according to the invention can optionally comprise further customarily used auxiliary substances and additives, such as pigments, plasticizers, diluents, curing agents, cross-linking agents, chain extenders, further catalysts, adhesive promoters, stabilizers, rheology additives and drying agents, and the like.

These components may be present in the first, the second and/or in further component of the multi-component composition. The first component comprises the at least one polyisocyanate and the second component comprises the at least one polyol.

Preferably, the weight ratio of the first component to the second component is in the range of 1:3 to 1:1, more preferably 1:2.5 to 1:1.5.

Preferably, a molar ratio between all free NCO groups and all NCO-reactive groups, preferably OH groups, in the composition according to the invention before mixing is between 0.8-1.2, preferably 0.9-1.1, especially 1.0-1.15, preferably 1.01-1.10 or 1.03-1.07.

The multi-component polyurethane composition according to the invention in principle can be employed in many areas, for example as a casting compound, sealant, adhesive, covering, coating, paint, subcoating, rigid foam, flexible foam, molding, elastomer, fiber, film or membrane for building and industrial applications, for example as an electrical potting compound, knifing filler, seam sealant, cavity sealant, joint sealant, assembly adhesive, autobody adhesive, window adhesive, sandwich element adhesive, laminating adhesive, laminate adhesive, packaging adhesive, wood glue, parquet flooring adhesive, anchoring adhesive, floor covering and coating, balcony and roof coating, protective concrete coating, parking garage coating, pipe coating, anti-corrosive coating, textile coating, wood paint, decorative paint, primer, furniture foam, upholstery foam, filter foam, insulating foam, sound insulating foam, sealing foam, packaging foam, autobody foam, pattern plate, damping element, sealing element, tire, roller, bearing, cylinder, conveyor belt, elastic thread, shoe sole, housing, window casement section, implant, cellular rubber and the like.

A highly preferred field of application are casting compounds and coatings, especially in printing technology, particularly for producing printing cylinders and/or sleeves.

A further aspect of the present invention is thus directed to a use of a multi-component polyurethane composition as described above for producing a printing cylinder or a printing sleeve, especially as a coating of a printing sleeve, especially an outer coating of a printing sleeve.

Another aspect of the invention is directed to a method for producing or recycling a printing sleeve whereby the components of a multi-component polyurethane composition as described above are mixed and applied on a sleeve body.

Especially, application of the mixed multi-component polyurethane composition takes place while rotating the sleeve body, in particular to form a coating, especially an outer coating, on the sleeve body.

The sleeve body may comprise or consist of synthetic materials, metallic materials and/or composite materials.

Another aspect of the present invention is directed to an article, especially a printing sleeve comprising or consisting of a cured multi-component polyurethane composition, especially as a coating on a sleeve body.

Special features and embodiments described above in connection with the multi-component polyurethane composition are advantageously also realized in the aforementioned articles, methods and uses.

Further advantageous implementations of the invention are evident from the exemplary embodiments. The examples are not intended to limit the scope of the invention in any way.

### Exemplary embodiments

### 1. Multi-component polyurethane compositions

For a first test of multi-component mixtures according to the invention, the following components have been provided:

| **Polyol component PC1** | Parts per weight |
|---|---|
| Bifunctional polyester polyol (235 g/eq)^{#} | 41 |
| Trifunctional polyether polyol (102 g/eq)^{#} | 5.1 |
| Bifunctional polyester polyol (1063 g/eq)^{#} | 39.2 |
| Amine-based tetrafunctional polyether polyol (72 g/eq)^{#} | 9.9 |
| Additives (catalyst, fillers) | 4.8 |
| | 100 |

| | |
|---|---|
| ^{#} Equivalent weight of a polyol | |

| **Polyisocyanate component PIC1** | Parts per weight |
|---|---|
| Methylene diphenyl diisocyanate (MDI; NCO content: 31.5%) | 100 |

| **Nanotubes** | |
|---|---|
| a) ATHLOS'^{™} SR1200 Carbon Nanostructure Pellets (Cabot Corportaion USA): branched and cross-linked multi-walled carbon nanotubes (BCNT). | Proportions and mixing ratios as indicated further below |
| b) TUBALL MATRIX 301 (OCSiAl Europe) dispersion of single-walled carbon nanotubes in surfactant solution (10 wt.% SWCNT in 90wt.% solution; SWCNT). | |

All formulations were prepared with a standard dissolver. Prior to adding the nanotubes, a master batch (5kg) containing all other ingredients of the polyol component was prepared. Mixing ratio of polyol component 1 (**PC1**) to polyiocyanate component 1 (**PIC1**) was 100:55. Branched and cross-linked multi-walled carbon nanotubes (BCNT) and single-walled carbon nanotubes (SWCNT) require a certain shear stress to be well dispersed into the formulations. Therefore, all formulations were prepared in the same manner.

Subsequently, to one sample of the master batch, a defined proportion of the nanotubes were added such as to obtain a sample of 700 g. The total proportion of the nanotubes (= sum of weight of BCNT plus SWCNT (active content, without polymer matrix)) in each case was fixed at 0.3 wt.% with respect to the polyol component **PC1.** The ratio between the branched and cross-linked multi-walled carbon nanotubes and the single-walled carbon nanotubes is indicated further below.

Addition of the nanotubes took place while mixing. After addition, the mixture was dissolved for 15 min at 2500 rpm, using a standard dissolver equipment (diameter of dissolver disc: 70 mm). After deaeration, the resins were tempered for further testing at 20 °C.

### 2. Measuring methods

Rheological measurements (**viscosity, yield point**) were carried using an Anton Paar rheometer, a Peltier temperature control unit, and a plate-plate measurement system PP25 (Ø 25 mm; shear rate was 50 s⁻1; 1 mm gap). The temperature was 25°C for all measurements.

To test the anti-sag properties, the following **flow tests** were performed: the formulations were applied on a wooden panel and scraped at 6, 7, 8 and 9 mm height. Right after scraping, the wooden panel was put vertically to observe the sagging behavior of the mixture.

For resistivity measurements, formulations were casted by hand and cured in molds. After demolding the specimens were stored at 23 °C, 50 % r. H. for 7 days. After three days of storage, the specimens were milled to a final thickness of 4 mm and **volume resistivity** ("Vol. res.") was measured at 10 V and 100 V at 23°C, 50 % r. H with a standard resistivity meter.

### 3. Rheological properties and resistivity

The following table shows the results of the measurements with the formulations based on components **PC1** and **PIC1:**

| **Exp. →** | **R1** | **R2** | **A** | **B** | **C** | **D** | **E** |
|---|---|---|---|---|---|---|---|
| **Property ↓** | | | | | | | |
| BCNT:SWCNT¹⁾ | - | 0:6 | 6:0 | 5.5:0.5 | 5:1 | 3:3 | 1:5 |
| Viscosity [mPas] | 7674 | 16'840 | 24'060 | 22'930 | 22'020 | 20'670 | 19'040 |
| Yield point [Pa] | - | 143 | 219 | 177 | 198 | 193 | 180 |

| Vol. res. [Ohm] | | | | | | | |
|---|---|---|---|---|---|---|---|
| 10 V | >10⁶ | 8'400 | 19'500 | 15'300 | 11 '700 | 24'000 | 10'500 |
| 100 V | >10⁹ | <100k | <100k | <100k | <100k | <100k | <100k |

| Flow test²⁾ | | | | | | | |
|---|---|---|---|---|---|---|---|
| 6 mm | -- | + | ++ | ++ | ++ | ++ | + |
| 7 mm | -- | + | + | ++ | ++ | + | + |
| 8 mm | -- | 0 | + | ++ | + | + | 0 |
| 9 mm | -- | - | 0 | + | 0 | 0 | 0 |

| | | | | | | | |
|---|---|---|---|---|---|---|---|
| ¹⁾ Weight ratio; total proportion with respect to polyol component = 0.3 wt.%; With experiment R1, neither any BCNT nor any SWCNT were present. ²⁾ "--" = strongly flowing; "-" = slightly flowing; "0" = slightly sagging; "+" = slightly stable; "++" = stable | | | | | | | |

It was shown that the higher the content of BCNT, the higher the viscosity and the yield point was. In contrast, decreasing the content of BCNT, while increasing the content of SWNCT, the viscosity decreased, while the yield point decreased as well.

Regarding the sagging behavior, it was generally shown that a content of 0.3% of BCNT or 0.3% SWCNT or 0.3% of a mixture of BCNT/SWCNT improved the sagging behavior compared to the formulation without any BCNT or SWCNT. Further, it was shown that an increasing content of BCNT decreased the flowability of the mixture, while an increasing content of SWCNT increased the flowability.

Regarding the volume resistivity, it was shown that using 0.3% SWCNT (0:6) instead of 0.3% BCNT (6:0) reduced the resistivity by 57%, while using 0.25% BCNT combined with 0.05% SWCNT (5:1) reduced the resistivity by 40% compared to only using 0.3% BCNT (6:0). By reversing the ratio from 5:1 to 1:5, meaning the usage of 0.05% BCNT combined with 0.25% SWCNT, the resistivity was reduced by 10%.

With respect to pumpability, it was shown in trials with a standard 2C-machine that the formulation 5:1 is pumpable and stays stable, when being applied on a rotating roller.

Thus, by using BCNT, it was possible to reduce the flowability of the resin to make it stable for staying on a vertical panel, when being scraped to a certain thickness from 6 to 9 mm. Furthermore, it was possible to enhance the stability, while decreasing the resistivity by adding SWCNT. The best results were achieved by using combinations of BCNT and SWCNT.

### 4. Effect of the chemical nature of the catalyst on resistivity

In order to investigate the effect of the chemical nature of the catalyst, a second series of experiments were performed. Thereby the following polyol component **PC2** was used:

| **Polyol component PC2** | Parts per weight |
|---|---|
| Trifunctional polyether polyol (102 g/eq)^{#} | 30 |
| Vegetable oil (337 g/eq)^{#} | 60 |
| Amine-based tertafunctional polyether polyol (72 g/eq)^{#} | 39.2 |
| Additives (catalyst, fillers) | 5.5 (proportion of catalysts as described further below) |
| | 100 |

| | |
|---|---|
| ^{#} Equivalent weight of a polyol | |

Formulations were prepared in a manner similar to the formulations described in chapter 1. Mixing ratio of polyol component 1 (**PC1**) to polyisocyanate component 1 (**PIC1**) was 100:55. Formulations with a tin catalyst (dibutyltin dilaurate), were formulated with 0.008 wt.% of the catalyst with respect to the total weight of the polyol component **PC2.** Formulations with amine catalyst (1,4-diazabicyclo[2.2.2]octane) contained 0.18 wt.% of the catalyst with respect to the total weight of the polyol component **PC2.**

Resistivity measurements were performed as described in chapter 2. The following results were obtained:

| **Exp. →** | **R3** | **R4** | **F** | **G** | **H** | **I** |
|---|---|---|---|---|---|---|
| **Property ↓** | | | | | | |
| BCNT:SWCNT¹⁾ | - | 0:6 | 6:0 | 5:1 | 3:3 | 1:5 |

| Vol. res. without any catalyst [Ohm] | | | | | | |
|---|---|---|---|---|---|---|
| 10 V | >10⁶ | 8'400 | 130k | 16'400 | 8'300 | 4'900 |
| 100 V | >10⁹ | <100k | <100k | <100k | <100k | <100k |

| Vol. res. with tin catalyst [Ohm] | | | | | | |
|---|---|---|---|---|---|---|
| 10 V | >10⁶ | 5'600 | 260k | 16'100 | 5'800 | 7'800 |
| 100 V | >10⁹ | <100k | 165k | <100k | <100k | <100k |

| Vol. res. with amine catalyst [Ohm] | | | | | | |
|---|---|---|---|---|---|---|
| 10 V | >10⁶ | 7'700 | 195k | 32'000 | 8'900 | 17'200 |
| 100 V | >10⁹ | <100k | 130k | <100k | <100k | <100k |

| | | | | | | |
|---|---|---|---|---|---|---|
| ¹⁾ Weight ratio; total proportion with respect to polyol component = 0.3 wt.%; With experiment R3, neither any BCNT nor any SWCNT were present | | | | | | |

The results show that with a tin catalyst, the lowest resistivity was achieved. Therefore, it can be concluded, that a metal catalyst is preferred and in particular tin catalysts are favored.

Therefore, the compositions according to the invention are highly suitable for use as casting compounds and coatings, especially in printing technology, particularly for producing printing cylinders and/or sleeves.

It will be appreciated by those skilled in the art that the present invention can be implemented in other specific forms without departing from the spirit or essential characteristics thereof. The presently disclosed embodiments are therefore considered in all respects to be illustrative and not restrictive.

## Claims

1. Multi-component polyurethane composition, especially a two-component polyurethane composition, comprising a first component comprising at least one polyisocyanate and a second component comprising at least one polyol, whereby the composition further comprises branched carbon nanotubes, and, optionally, single-walled carbon nanotubes.

2. Composition according to claim 1, whereby the branched carbon nanotubes are provided and/or used in the form of a particulate solid, especially a powder.

3. Composition according to any of preceding claims, whereby the branched carbon nanotubes are particles having an outer mean diameter with D10 = 6 - 9 nm, D50 = 9 - 13 nm and/or D90 = 19 - 21 nm; and/or whereby a length of the branched carbon nanotubes is in the range of 25 - 140 µm and/or whereby the branched carbon nanotubes have a specific surface area of 150 - 350 m²/g.

4. Composition according to any of preceding claims, whereby the branched carbon nanotubes are branched multi-walled carbon nanotubes, especially branched and cross-linked multi-walled carbon nanotubes.

5. Composition according to any of preceding claims, whereby, with respect to the total weight of the second component, a proportion of the branched carbon nanotubes is from >0 - 1 wt.%, especially >0 - 0.5 wt.%, in particular 0.1 - 0.4 wt.%, especially 0.2 - 0.3 wt.%.

6. Composition according to any of preceding claims comprising both, the branched carbon nanotubes and the single-walled carbon nanotubes.

7. Composition according to any of preceding claims, whereby the single-walled carbon nanotubes have an outer mean diameter of about 0.4 - 25 nm, especially 0.6 - 10 nm, for example 1 - 5 nm, in particular 1.2 - 2.0 nm; and/or the single-walled carbon nanotubes have a mean length of at least 0.5 µm, especially of at least 1 µm, in particular of at least 4 µm, especially of at least 5 µm.

8. Composition according to any of preceding claims, whereby, with respect to the total weight of the second component, a proportion of the single-walled carbon nanotubes is from >0 - 1 wt.%, especially >0 - 0.3 wt.%, in particular 0.01 - 0.15 wt.%, especially 0.02 - 0.07 wt.%.

9. Composition according to any of preceding claims, whereby a weight ratio of the branched carbon nanotubes to the single-walled carbon nanotubes is in the range of 0.05 - 15, especially 0.1 - 13, in particular 0.5 - 12, particularly 1 - 11, for example 2 - 7.

10. Composition according to any of preceding claims further comprising at least one catalyst, especially selected from organometallic compounds and/or amines.

11. Composition according to any of preceding claims whereby the at least one catalyst is selected from bismuth, tin and/or zirconium compounds, and/or from secondary and/or tertiary amines, especially the catalyst comprises a tin compound.

12. Composition according to any of preceding claims whereby the branched carbon nanotubes and, if present the optional single-walled carbon nanotubes, is/are present in the second component.

13. Use of a multi-component polyurethane composition according to any of preceding claims for producing or recycling a printing sleeve, especially for producing a coating of a printing sleeve, in particular an outer coating of a printing sleeve.

14. Method for producing or recycling a printing sleeve whereby the components of a multi-component polyurethane composition according to any of claims 1 - 12 are mixed and applied on a sleeve body, especially while rotating the sleeve body, to form a coating, especially an outer coating, on the sleeve body.

15. Printing sleeve comprising a cured multi-component polyurethane composition according to any of claims 1 - 12, especially as a coating on a sleeve body.
